# FASCICULE DE BREVET EUROPEEN

(11) **EP 0 646 702 B1**
(45) Date de publication et mention de la délivrance du brevet: **03.09.1997**
(21) Numéro de dépôt: 94402190.6
(22) Date de dépôt: 30.09.1994
(51) Int. Cl.: F02B 29/04, F02B 29/00

(54) **Procédé et dispositif de commande d'un fluide traversant un boîtier de dérivation et système équipé d'un tel dispositif pour réguler l'air de suralimentation d'un moteur à combustion interne**
Verfahren und Vorrichtung zur Regelung des Durchflusses durch ein Verzweigergehäuse und mit solch einer Vorrichtung ausgerüstetes System zur Regelung der Ladeluft einer Brennkraftmaschine
Method and device for controlling the flow through a branch housing and system equipped with such a device for controlling the charge air of an internal combustion engine

(30) Priorité: 05.10.1993 FR 9311856
(43) Date de publication de la demande: 05.04.1995
(73) Titulaire: RENAULT VEHICULES INDUSTRIELS Société Anonyme dite:, 69003 Lyon (FR)
(72) Inventeur: Pernet, Jean-Paul, F-69680 Chassieu (FR)
(74) Mandataire: Ernst-Schonberg, Michel

(56) Documents cités:
- EP-A- 0 080 983
- WO-A-92/01145
- GB-A- 2 055 963

## Description

La présente invention concerne un procédé et un dispositif de commande de la circulation d'un fluide à travers un boîtier de dérivation de fluide, boîtier de dérivation normalement connu sous le nom de by-pass. L'invention concerne également un système de régulation de l'air de suralimentation d'un moteur à combustion interne.

Les boîtiers de dérivation ou by-pass sont couramment utilisés pour distribuer sélectivement un fluide dans deux conduites distinctes. Généralement, un boîtier de dérivation comprend une enveloppe ou paroi extérieure qui délimite une entrée de fluide, une sortie principale du fluide, une sortie secondaire de dérivation de fluide et une chambre intérieure pour fluide dans laquelle est monté un volet d'obturation pivotant entre une position de fermeture de la sortie principale et une position de fermeture de la sortie de dérivation. Lorsque la sortie principale est obturée par le volet, le boîtier de dérivation est dit ouvert. Lorsque la sortie secondaire de dérivation est obturée par le volet, le boîtier de dérivation est dit fermé. D'une manière générale, le volet d'obturation du boîtier de dérivation est actionné par un vérin hydraulique ou un actionneur électromagnétique. La commande du vérin ou de l'actionneur est assurée à l'aide d'un système piloté électroniquement nécessitant de nombreux capteurs d'informations pour répondre aux exigences de fonctionnement du système.

La présente invention a pour objet de proposer un procédé de commande de la circulation d'un fluide à travers un boîtier de dérivation, particulièrement simple avec un asservissement pneumatique obtenu directement par la pression du fluide se trouvant dans le boîtier de dérivation pour commander le volet d'obturation du boîtier de dérivation.

L'invention a également pour objet un dispositif de mise en oeuvre du procédé de structure simple et économique.

Le procédé de l'invention est destiné à commander la circulation d'un fluide à travers un boîtier de dérivation de fluide qui comporte une entrée, une sortie principale, un sortie secondaire de dérivation et des moyens d'obturation sélectifs desdites sorties, lesdits moyens d'obturation étant commandés par un vérin. On actionne le vérin pneumatiquement et directement par le fluide se trouvant dans le boîtier de dérivation, de façon à fermer la sortie de dérivation lorsque la pression du fluide dans le boîtier de dérivation est supérieure à un seuil prédéterminé de pression.

On ouvre partiellement la sortie de dérivation qui se retrouve à l'état fermé lorsque la température du fluide dans le boîtier de dérivation est inférieure à un premier seuil prédéterminé de température. Selon l'invention, on utilise des moyens mécaniques à l'intérieur du boîtier de dérivation et agissant directement sur les moyens d'obturation sélective, lesdits moyens mécaniques étant déformables thermiquement de façon à ce que la température du fluide se trouvant dans le boîtier de dérivation commande de manière autonome l'ouverture partielle de la sortie de dérivation par lesdits moyens mécaniques. Cette ouverture partielle peut être obtenue par des moyens mécaniques thermiquement sensibles et agissant directement sur le volet d'obturation.

Avantageusement, on peut également actionner pneumatiquement le vérin par un fluide de commande distinct du fluide traversant le boîtier de dérivation, de façon à pouvoir fermer la sortie de dérivation lorsque la température du fluide à la sortie de dérivation est supérieure à un second seuil prédéterminé de température. Dans ce cas, l'asservissement pneumatique du vérin nécessite une source de fluide sous pression, par exemple de l'air comprimé, source distincte du fluide se trouvant dans le boîtier de dérivation. On peut alors envisager des vérins pneumatiques de structure adaptée pour la mise en oeuvre du procédé comme il sera décrit par la suite.

Parmi les nombreuses applications possibles de la présente invention, on peut citer le cas particulier d'un système de régulation de l'air de suralimentation pour un moteur à combustion interne. Une telle application est particulièrement importante pour des véhicules routiers en vue d'améliorer les performances, la fiabilité des moteurs et de respecter les normes antipollution des gaz d'échappement du moteur.

On peut citer la demande de brevet internationale WO 92/01145 qui prévoit un tel système de régulation de l'air de suralimentation. Dans ce document, il est prévu de refroidir d'abord l'air de suralimentation sortant d'un turbocompresseur à l'aide d'un échangeur liquide de refroidissement du moteur/air de suralimentation. L'air de suralimentation issu de cet échangeur passe dans un boîtier de dérivation dont la sortie principale est connectée à un second échangeur air de suralimentation/air ambiant et dont la sortie secondaire de dérivation est reliée directement au collecteur d'admission du moteur. Une unité centrale de commande électronique gère les informations fournies par des capteurs de température : la température de l'air de suralimentation entrant dans le moteur, la température des gaz de combustion issus du moteur et la température des gaz à l'échappement, et par d'autres capteurs fournissant notamment le régime du moteur. L'unité centrale commande ensuite électriquement un actionneur électromécanique qui commande le pivotement du volet d'obturation du boîtier de dérivation. Un tel système de régulation est particulièrement complexe et nécessite un grand nombre de capteurs d'informations avec une unité centrale gérée électroniquement.

Le document EP-A-80 983 décrit un procédé de commande et un dispositif de mise en oeuvre de la circulation d'un fluide à travers un boîtier de dérivation de fluide. Selon une forme d'exécution de la valve de dérivation où celle-ci est disposée dans le passage de by-pass en aval de l'échangeur, la valve permet de fermer, dans une première position extrême, le passage de l'air de suralimentation par l'échangeur de chaleur et, dans l'autre position extrême, elle ferme le passage de l'air à travers le by-pass. Cette valve de dérivation peut aussi être disposée dans le passage de by-pass en amont de l'échangeur. Dans ce cas, elle doit permettre le passage de l'air de la même manière que lorsque la valve disposée en aval de l'échangeur, c'est-à-dire : dans une position extrême elle ferme le passage par l'échangeur, et, dans l'autre position extrême, elle ferme le passage par le by-pass. Il apparaît, lorsque la valve de dérivation est disposée dans le by-pass en amont de l'échangeur, que le boîtier de cette valve doit avoir une entrée et deux sorties, une sortie principale allant vers l'échangeur et une sortie secondaire allant vers le by-pass et des moyens d'obturation de ces sorties commandés par un vérin.

Le procédé de commande décrit consiste alors à actionner le vérin pneumatiquement et directement par le fluide se trouvant dans le boîtier de dérivation de façon à fermer au moins partiellement la sortie de dérivation lorsque la pression du fluide dans le boîtier de dérivation est supérieure à un seuil prédéterminé de pression et à ouvrir partiellement la sortie de dérivation qui se trouve à l'état fermée lorsque la température de l'air ambiant est inférieure à un seuil prédéterminé (par l'augmentation de la contrepression agissant sur le piston du vérin). Puisque la température du fluide dans le boîtier est fonction de la température de l'air ambiant (et de l'augmentation de la pression dans le compresseur), la sortie de dérivation qui se trouve fermée à haute pression de suralimentation est partiellement ouverte lorsque la température du fluide ambiant (l'air atmosphérique) et donc du fluide dans le boîtier (l'air de suralimentation) est inférieure à un certain seuil de température.

La présente invention a pour objet de perfectionner ce procédé et son dispositif de mise en oeuvre et ils sont caractérisés en ce qu'on utilise des moyens mécaniques à l'intérieur du boîtier de dérivation et agissant directement sur les moyens d'obturation, ces moyens mécaniques étant déformables thermiquement de façon à ce que la température du fluide se trouvant dans le boîtier de dérivation commande de manière autonome l'ouverture partielle de la sortie de dérivation par lesdits moyens mécaniques.

La présente invention a aussi pour objet un système de régulation de l'air de suralimentation pour un moteur à combustion interne équipé d'un tel dispositif.

L'invention sera mieux comprise à l'étude de la description détaillée de quelques modes de réalisation dans une application particulière prise à titre d'exemple nullement limitatif et illustrés par les dessins annexés, sur lesquels :
- la figure 1 est un schéma de fonctionnement d'un boîtier de régulation de l'air de suralimentation pour un moteur à combustion interne ;
- la figure 2 est une vue schématique d'une partie de la figure 1 réalisée selon la présente invention ;
- les figures 3a et 3c représentent trois états de fonctionnement d'un vérin pneumatique selon l'invention;
- les figures 4a et 4b illustrent schématiquement l'ouverture partielle du volet d'obturation selon l'invention ; et
- la figure 5 est une vue schématique d'un autre vérin pneumatique de l'invention.

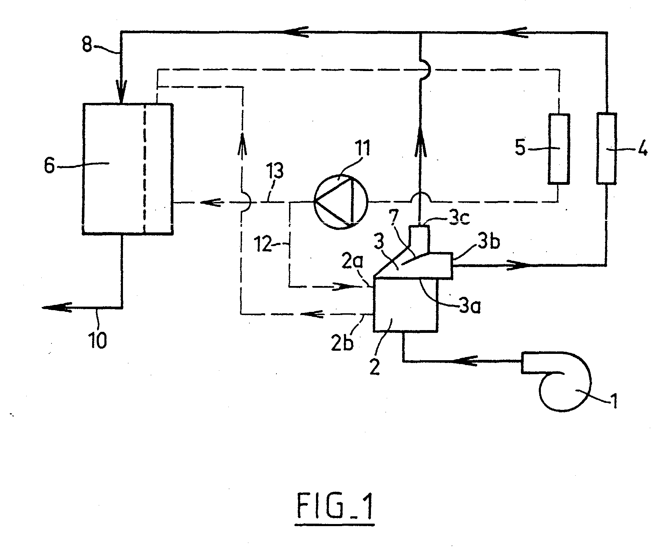

Le système de régulation de l'air de suralimentation comme illustré sur la figure 1, comprend un turbocompresseur 1, un premier échangeur air/liquide 2, un boîtier de dérivation 3, un premier radiateur 4 d'air de suralimentation et un second radiateur 5 du liquide de refroidissement du moteur 6. Comme indiqué sur la figure 1, le turbocompresseur fournit de l'air de suralimentation-qui passe d'abord dans l'échangeur air/liquide 2 avant de traverser le boîtier de dérivation 3. L'échangeur air/liquide est alimenté via une entrée 2a en liquide de refroidissement du moteur. Une sortie 2b évacue le liquide ayant traversé l'échangeur 2. Selon la température de l'air de suralimentation et celle du liquide de refroidissement, le liquide de refroidissement permet, soit de refroidir, soit de réchauffer l'air de suralimentation traversant l'échangeur 2.

En sortant de l'échangeur 2, l'air de suralimentation passe dans le boîtier de dérivation 3 par son entrée 3a et sort, soit par la sortie principale 3b, soit par la sortie secondaire de dérivation 3c. L'obturation sélective des sorties 3b et 3c est effectuée au moyen d'un volet pivotant 7 dans le boîtier de dérivation 3.

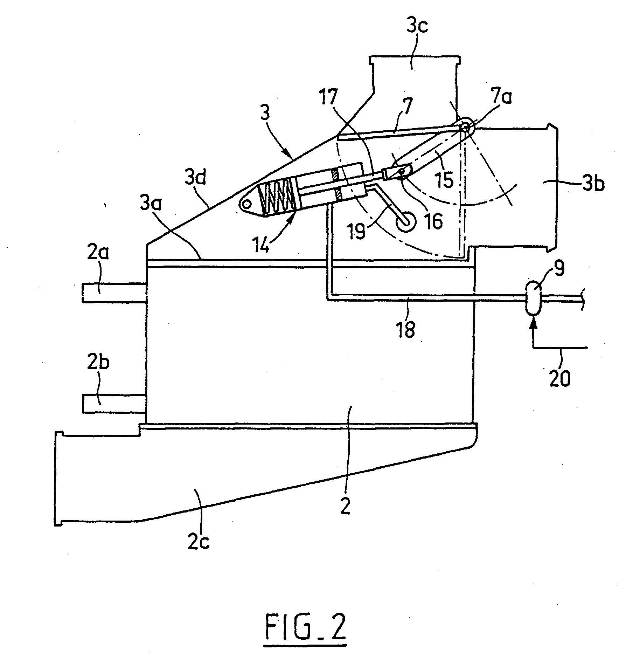

Un capteur 8 de température est situé dans le collecteur d'admission de l'air de suralimentation en amont du moteur 6 et fournit un signal de commande à une électrovanne 9 (figure 2), lorsque la température mesurée de l'air de suralimentation dépasse un seuil prédéterminé T2 de température, afin d'actionner un moyen de commande du volet pivotant 7 qui ferme la sortie de dérivation 3c. L'air de suralimentation qualifié ainsi de "chaud" passe alors par la sortie principale 3b du boîtier de dérivation 3 pour être refroidi une seconde fois par le radiateur 4 avant d'être envoyé dans le collecteur d'admission d'air du moteur 6. Lorsque la température mesurée par le capteur 8 est inférieure au seuil prédéterminé T2, le volet d'obturation 7 ferme la sortie principale 3b et l'air de suralimentation sort par la sortie secondaire de dérivation 3c pour être envoyé directement dans le collecteur d'admission de l'air de suralimentation du moteur 6. Les gaz de combustion de sortie du moteur 6 sont évacués par une conduite 10 vers le système d'échappement non représenté.

Le liquide de refroidissement du moteur 6 fonctionne en circuit fermé grâce à une pompe 11. Le liquide de refroidissement du moteur 6 est refroidi au moyen du radiateur 5 et éventuellement par l'échangeur 2 lorsque l'air de suralimention a une température inférieure à celle du liquide de refroidissement. L'entrée 2a de l'échangeur est reliée à l'aval de la pompe hydraulique 11 par une conduite de dérivation 12, la conduite principale 13 reliant la pompe hydraulique 11 au moteur 6. La sortie 2b de l'échangeur 2 est reliée à la sortie du moteur 6 de façon à ce que le liquide de refroidissement issu de l'échangeur 2 ne soit pas directement recyclé vers le moteur, ce qui ne pénalise pas le refroidissement du moteur. On obtient ainsi une optimisation hydraulique et un meilleur bilan énergétique pour le circuit de refroidissement du moteur.

La figure 2 représente schématiquement l'ensemble formé par l'échangeur air/liquide 2, le boîtier de dérivation 3 et les moyens de commande 14 du volet d'obturation 7 du boîtier de dérivation 3. L'échangeur 2 présente une entrée 2c pour l'air de suralimentation ainsi qu'une sortie d'air de suralimentation confondue avec l'entrée 3a du boîtier de dérivation 3.

Le boîtier de dérivation 3 présente une enveloppe ou paroi extérieure 3d qui délimite l'entrée 3a, les sorties principales 3b et secondaires de dérivation 3c ainsi qu'une chambre intérieure pour l'air de suralimentation. Le volet d'obturation- 7 pivote dans la chambre intérieure du boîtier de dérivation autour d'un axe 7a situé à l'un de ses bords placés horizontalement sur la figure. L'axe 7a de pivotement se prolonge et traverse la paroi extérieure 3d du boîtier de dérivation pour être en prise avec une extrémité d'un bras de levier 15, l'autre extrémité du bras de levier 15 pivotant autour d'un axe 16 autour duquel pivote également l'extrémité libre d'une tige 17 d'un piston d'un vérin de commande 14. Le déplacement de la tige 17 du piston du vérin entraîne le pivotement du bras 15 autour de l'axe 7a qui est également entraîné en rotation pour actionner à son tour le pivotement du volet d'obturation 7.

Le vérin de commande 14 est un vérin asservi pneumatiquement par deux sources pneumatiques distinctes, l'une étant constituée par l'air comprimé du circuit de servitude du véhicule via la conduite 18 et l'autre étant constituée par l'air de suralimentation se trouvant dans la chambre intérieure du boîtier de dérivation 3 via la conduite 19.

Comme il a été évoqué précédemment, l'électrovanne 9 installée sur la conduite de connexion 18 est commandée par le capteur de température 8 (figure 1) situé dans le collecteur d'admission de l'air de suralimentation du moteur 6 via une liaison 20 (partiellement représentée sur la figure 2). Lorsque la température mesurée par le capteur 8 dépasse un seuil prédéterminé de température T2, par exemple de l'ordre de 50°C, l'électrovanne 9 est ouverte pour que l'air comprimé actionne le vérin pneumatique 14 en vue de fermer la sortie secondaire de dérivation 3c par le volet d'obturation 7. Mais lorsque la température mesurée par le capteur 8 est inférieure au seuil prédéterminé T2, l'électrovanne 9 reste à l'état fermé, ce qui supprime l'actionnement pneumatique par le circuit de servitude via la conduite de connexion 18. Le vérin pneumatique 14 revient alors à son état d'attente en ramenant le volet d'obturation 7 à sa position ouverte, c'est-à-dire obturant la sortie principale 3b du boîtier de dérivation 3.

Le vérin pneumatique 14 est également asservi pneumatiquement et directement par l'air de suralimentation se trouvant dans le boîtier de dérivation 3 via la conduite 19 qui traverse simplement la paroi extérieure 3d du circuit. Indépendamment de la régulation en température, la pression qui régnait dans. le boîtier de dérivation 3 constitue un moyen d'actionnement pneumatique autonome du vérin 14. Lorsque la pression interne dans le boîtier de dérivation 3 dépasse un seuil prédéterminé de pression PO, pression prédéterminée par les caractéristiques propres du vérin pneumatique 14, l'air de suralimentation actionne le vérin pneumatique pour ramener le boîtier de dérivation 3 à l'état fermé. C'est-à-dire la fermeture de la sortie de dérivation 3c par le volet d'obturation 7. Lorsque la pression de l'air de suralimentation dans le boîtier de dérivation est redevenue inférieure au seuil prédéterminé PO, le vérin pneumatique 14 retourne sous l'effet d'un ressort à son état d'attente en ouvrant de nouveau la sortie de dérivation 3c.

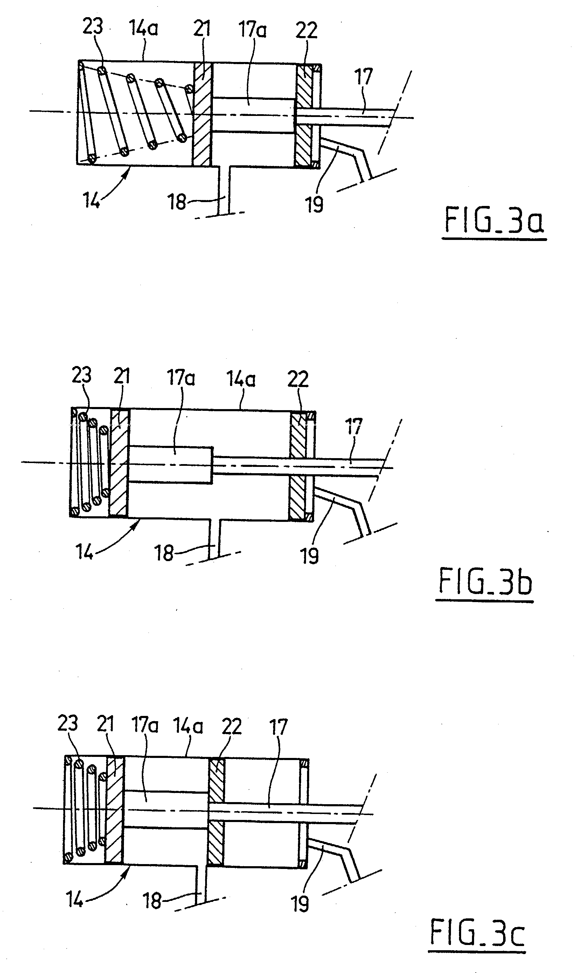

Les figures 3a, 3b et 3c illustrent un vérin pneumatique permettant d'assurer la commande du boîtier de dérivation 3. Le vérin pneumatique 14 comprend un cylindre 14a dans lequel coulissent deux pistons 21 et 22. Le premier piston 21 est solidaire de la tige 17 du piston, et le second piston 22 coulisse par rapport à la tige 17. La tige 17 dont une extrémité est fixée au premier piston 21, présente une partie cylindrique 17a de section plus grande que le reste de la tige 17 pour former butée axiale au second piston 22. Au fond du cylindre 14 se trouve un ressort de compression 23 qui agit axialement contre le premier piston 21 en vue de pousser la tige 17 du piston en-dehors du cylindre 14a, ce qui se traduit par une force de rappel exercée sur le volet d'obturation 7 en vue d'ouvrir le boîtier de dérivation.

Dans le cas illustré sur la figure 3a, le vérin pneumatique 14 est à l'état d'attente. C'est la force de rappel du ressort de compression axiale 23 qui domine. Cela correspond à l'état où la température de l'air de suralimentation à l'entrée du moteur 6, mesurée par le capteur 8 est inférieure au seuil prédéterminé T2 et la pression de l'air de suralimentation dans le circuit de dérivation 3 est inférieure au seuil prédéterminé PO. C'est le cas par exemple au démarrage du moteur 6.

La figure 3b illustre un état d'actionnement pneumatique du vérin 14 par le circuit de servitude du véhicule via la conduite de connexion 18. La pression de l'air comprimé alimentant le cylindre 14a agit en contresens du ressort de compression 23 en le plaquant au fond du cylindre 14a et entraînant en même temps la tige 17 du piston vers l'intérieur du cylindre. Ce qui se traduit par une fermeture du boîtier de dérivation 3 par le volet d'obturation 7 pivotant. Le second piston 22 est plaqué quant à lui par la pression pneumatique dans le cylindre vers l'autre extrémité du cylindre. Cet état de fonctionnement du vérin pneumatique 14 correspond à un état où la température de l'air de suralimentation entrant dans le moteur 6 mesurée par le capteur 8 est devenue supérieure au seuil prédéterminé T2 et la pression de l'air de suralimentation dans le boîtier de dérivation 3 est inférieure au seuil prédéterminé PO.

La figure 3c illustre un état d'actionnement du vérin pneumatique 14 par le second piston 22 qui est poussé pneumatiquement par la pression de l'air de suralimentation se trouvant dans le boîtier de dérivation via la conduite 19. Le second piston 22 vient en appui axialement sur la partie cylindrique élargie 17a de la tige 17 en vue de déplacer axialement le premier piston 21 contre le ressort de compression 23. Le boîtier de dérivation 3 se trouve alors à l'état fermé par le pivotement du volet d'obturation 7 entraîné par le mouvement de retrait de la tige 17 du piston. L'actionnement pneumatique du second piston 22 est directement obtenu par l'air de suralimentation se trouvant dans le boîtier de dérivation et se fait de façon autonome et indépendante des autres conditions, puisqu'il suffit que la pression de l'air de suralimentation dans le boîtier de dérivation soit supérieure au seuil prédéterminé de pression PO. La valeur du seuil prédéterminé de pression PO est déterminée principalement par la force de rappel du ressort de compression 23. On peut fixer cette valeur par exemple à 1,4 bars.

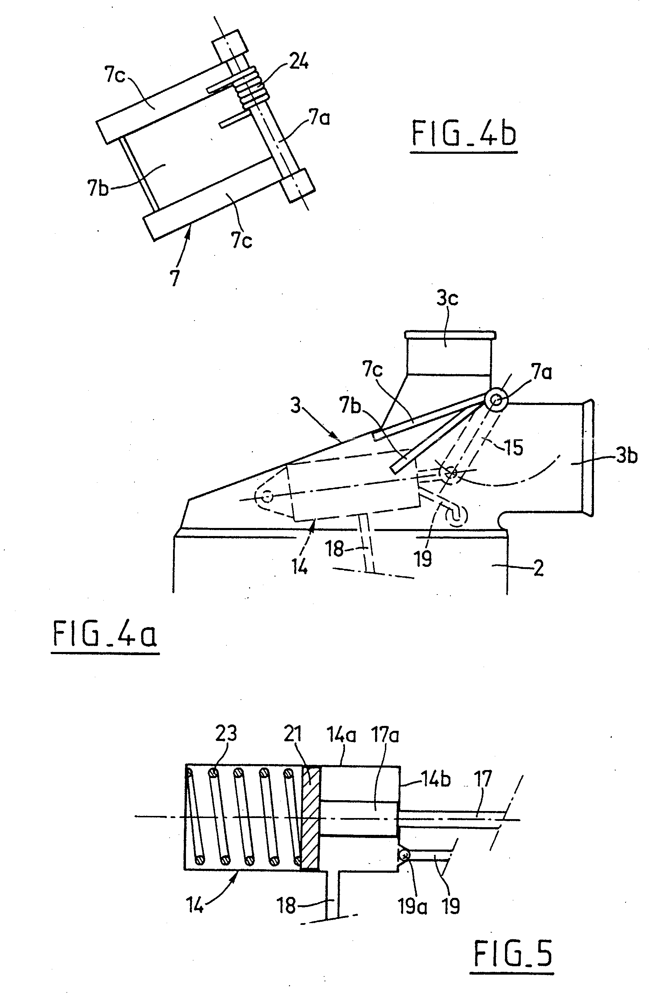

La figure 5 illustre une autre possibilité de construction du vérin pneumatique 14 dont le fonctionnement est équivalent à celui qu'on vient de décrire. Dans ce mode de réalisation, on supprime le second piston 22 coulissant et on ajoute un clapet antiretour 1 9a sur la conduite de connexion 19 reliant le cylindre 14a et le boîtier de dérivation 3. L'actionnement pneumatique du vérin 14 déclenché par le capteur de température 8 demeure identique. Le clapet antiretour 19a a pour fonction d'empêcher la communication entre le cylindre 14a sous pression pneumatique alimentée par la conduite 18, et le boîtier de dérivation 3, mais tout en autorisant leur communication lorsque le cylindre 14a n'est pas alimenté pneumatiquement via la conduite de connexion 18. La partie cylindrique élargie 17a constitue une buté par rapport à la paroi radiale 14b à l'extrémité du cylindre 14a. Le ressort de compression 23 peut être un ressort hélicoïdal cylindrique (figure 5) ou tronconique (figure 3).

En se référant aux figures 4a et 4b, on va décrire maintenant une autre caractéristique importante de l'invention.

En plus du fonctionnement décrit précédemment, il est possible d'obtenir une régulation thermique par l'ouverture partielle du volet d'obturation. Dans ce cas de fonctionnement, il y a une fraction variable de l'air de suralimentation qui est dirigée directement vers le moteur via la sortie secondaire de dérivation.

Le volet d'obturation 7 est composé de deux parties : une partie centrale 7b et une partie formant cadre 7c latéral à la partie centrale 7b. Un ressort bilame 24 est enroulé autour de l'axe 7a de pivotement du volet 7 et présente ses deux extrémités appuyées respectivement sur la partie centrale 7b et la partie formant cadre 7c du volet. L'effort de rappel en torsion du ressort bilame 24 tend à écarter angulairement les parties 7b et 7c du volet 7. Le ressort bilame 24 est de préférence réalisé à l'aide d'un matériau dont le coefficient de dilatation thermique est élevé. La force de rappel du ressort bilame 24 diminue lorsque la température subie par le ressort augmente. On peut choisir les caractéristiques du ressort bilame 24 en fonction d'un seuil prédéterminé de température T1 en-dessous de laquelle le ressort bilame 24 ouvre partiellement la partie centrale 7b du volet par rapport à la partie de cadre 7c du volet. Ce qui se traduit par une ouverture partielle du volet d'obturation 7.

En application (figure 4a), lorsque le boîtier de dérivation 3 se trouve à l'état fermé, c'est-à-dire lorsque le volet 7 obture la sortie de dérivation 3c, et si la température de l'air de suralimentation à l'intérieur du boîtier de dérivation 3 devient inférieure au seuil prédéterminé de température T1, la déformation thermique du ressort bilame 24 ouvre partiellement le volet 7, laissant passer une fraction de l'air de suralimentation directement vers le collecteur d'admission du moteur 6 de façon à réaliser une régulation thermique de l'air de suralimentation à l'entrée du moteur. Le seuil prédéterminé de température T1 peut être identique ou différent du seuil prédéterminé de température T2 pour l'air de suralimentation arrivant dans le collecteur d'admission du moteur 6. Le montage du ressort bilame 24 est neutralisé lorsque le volet 7 ferme la sortie principale 3b.

Il est possible de remplacer le ressort bilame 24 par une butée pour le volet 7 à l'état fermé. La butée peut comporter une portion réalisée en alliage à mémoire pouvant être déformée thermiquement et agissant sur la partie centrale 7b du volet 7. L'ouverture partielle du volet 7 est ainsi assurée de manière équivalente au ressort bilame 24.

## Revendications

1. Procédé de commande de la circulation d'un fluide à travers un boîtier de dérivation (3) de fluide qui comporte une entrée (3a), une sortie principale (3b), une sortie secondaire de dérivation (3c) et des moyens d'obturation sélective (7) desdites sorties commandés par un vérin (14), consistant à actionner le vérin pneumatiquement et directement par le fluide se trouvant dans le boîtier de dérivation de façon à fermer au moins partiellement la sortie de dérivation (3c) lorsque la pression du fluide dans le boîtier de dérivation est supérieure à un seuil prédéterminé de pression (PO) et à ouvrir partiellement la sortie de dérivation (3c) qui se trouve à l'état fermé lorsque la température du fluide dans le boîtier de dérivation est inférieure à un premier seuil prédéterminé de température (T1), caractérisé en ce qu'on utilise des moyens mécaniques (24) à l'intérieur du boîtier de dérivation (3) et agissant directement sur les moyens d'obturation sélective (7), lesdits moyens mécaniques étant déformables thermiquement de façon à ce que la température du fluide se trouvant dans le boîtier de dérivation commande de manière autonome l'ouverture partielle de la sortie de dérivation par lesdits moyens mécaniques.

2. Procédé selon la revendication 1, caractérisé en ce qu'il consiste à actionner pneumatiquement le vérin (14) par un fluide de commande distinct du fluide traversant le boîtier de dérivation (3), de façon à fermer la sortie de dérivation (3c) lorsque la température du fluide à la sortie de dérivation (3c) est supérieure à un second seuil prédéterminé de température (T2).

3. Dispositif pour la mise en oeuvre du procédé selon l'une des revendications précédentes, comprenant un boîtier de dérivation (3) avec une enveloppe extérieure (3d) délimitant une entrée pour fluide (3a), une sortie principale (3b), une sortie de dérivation (3c) et une chambre intérieure pour fluide, un volet d'obturation (7) pivotant dans la chambre intérieure du boîtier de dérivation entre une position de fermeture de la sortie principale et une position de fermeture de la sortie de dérivation, un vérin pneumatique (14) actionnant par sa tige (17) de piston le volet d'obturation via un bras pivotant (15) et l'axe de pivotement (7a) du volet, une conduite de connexion (19) entre la chambre intérieure et le cylindre (14a) du vérin établissant la communication en fluide entre le vérin pneumatique et la chambre intérieure du boîtier de dérivation, et un moyen élastique de rappel (23) dans le vérin (14) dont la force de rappel est choisie en fonction du seuil prédéterminé de pression (PO) du fluide se trouvant dans le boîtier de dérivation, ledit vérin pneumatique (14) comprenant un premier piston (21) solidaire d'une extrémité de la tige (17) de piston, caractérisé en ce que le vérin pneumatique comporte un second piston (22) coulissant axialement par rapport à la tige de piston, le premier piston étant en contact avec le ressort de rappel (23) du vérin, la tige de piston présentant une partie cylindrique élargie (17a) constituant une butée axiale pour le second piston dans le cylindre (14a) du vérin et en ce que le volet d'obturation (7) comprend une partie centrale (7b) et une partie formant cadre (7c) latéral, et un ressort bilame (24) déformable thermiquement et agissant sur les deux parties du volet respectivement, de façon à permettre l'ouverture partielle du volet lorsque la température du fluide dans le boîtier de dérivation (3) est inférieure à un seuil prédéterminé de température (T1).

4. Dispositif selon la revendication 3, caractérisé en ce que le vérin pneumatique (14) est relié par des conduites de connexion (18, 19) à deux sources pneumatiques d'asservissement distinctes.

5. Dispositif selon la revendication 4, caractérisé en ce que la conduite de connexion (19) entre le vérin pneumatique (14) et le boîtier de dérivation (3) comporte un clapet antiretour (19a).

6. Dispositif selon l'une des revendications 4 ou 5, caractérisé en ce qu'il comprend un capteur de température (8) du fluide à l'aval de la sortie de dérivation (3c) du boîtier de dérivation et une électrovanne (9) montée sur la conduite de connexion (18) d'une source de commande pneumatique, l'électrovanne étant ouverte si la température mesurée par le capteur dépasse un seuil prédéterminé de température (T2).

7. Dispositif selon l'une des revendications 3 à 6, caractérisé en ce qu'il comprend un élément de butée pour le volet d'obturation (7), l'élément de butée étant réalisé en un alliage à mémoire déformable thermiquement de façon à obtenir l'ouverture partielle du volet fermant la sortie de dérivation (3c) lorsque la température du fluide dans le boîtier de dérivation (3) est inférieure à un seuil prédéterminé de température (T1).

8. Système de régulation de l'air de suralimentation pour un moteur à combustion interne (6) équipé d'un dispositif selon l'une des revendications 3 à 7, caractérisé en ce que le boîtier de dérivation est monté sur un échangeur (2) air de suralimentation/liquide de refroidissement du moteur, l'entrée (3a) du boîtier de dérivation étant confondue avec la sortie de l'échangeur pour l'air de suralimentation, la sortie principale (3b) du boîtier de dérivation étant reliée à un radiateur (4) pour l'air de suralimentation, la sortie secondaire de dérivation (3c) du boîtier de dérivation étant reliée directement au collecteur d'admission de l'air de suralimentation du moteur.

9. Système de régulation selon la revendication 8, caractérisé en ce qu'il comprend un capteur de température (8) placé dans le collecteur d'admission d'air de suralimentation du moteur en vue d'actionner pneumatiquement via une électrovanne (9) le vérin pneumatique (14).

10. Système de régulation selon la revendication 8 ou 9, caractérisé en ce que l'échangeur (2) air/liquide est alimenté en liquide de refroidissement par un circuit dérivé (12) du circuit de refroidissement du moteur, le liquide de refroidissement sortant de l'échangeur n'étant pas directement recyclé à l'entrée du moteur.

## Patentansprüche

1. Verfahren zur Regelung des Durchflusses eines Fluids durch ein Fluidverzweigergehäuse (3), welches Gehäuse einen Eingang (3a), einen Hauptausgang (3b), einen zweiten Verzweigerausgang (3c) und Mittel (7) zum selektiven Verschließen der durch einen Zylinder (14) geregelten Ausgänge aufweist, welches Verfahren darin besteht, den Zylinder pneumatisch und direkt durch das Fluid zu betätigen, das sich im Verzweigergehäuse derart befindet, daß der Verzweigerausgang (3c) mindestens teilweise geschlossen wird, wenn der Druck des Fluids im Verzweigergehäuse höher als eine vorbestimmte Druckschwelle (PO) ist, und daß der Verzweigerausgang (3c), der sich in geschlossenem Zustand befindet, teilweise geöffnet wird, wenn die Temperatur des Fluids im Verzweigergehäuse niedriger als eine erste vorbestimmte Temperaturschwelle (T1) ist, dadurch gekennzeichnet, daß im Innern des Verzweigergehäuses (3) mechanische Mittel (24) verwendet werden, die auf die Mittel (7) zum selektiven Verschließen direkt einwirken, wobei die mechanischen Mittel thermisch derart verformbar sind, daß die Temperatur des Fluids, das sich im Verzweigergehäuse befindet, die teilweise Öffnung des Verzweigerausgangs durch die mechanischen Mittel selbständig regelt.

2. Verfahren nach Anspruch 1,
dadurch gekennzeichnet, daß es darin besteht, den Zylinder (14) durch ein Fluid zur unterscheidbaren Regelung des Fluids, das das Verzweigergehäuse (3) durchquert, pneumatisch zu betätigen, daß der Verzweigerausgang (3c) geschlossen wird, wenn die Temperatur des Fluids am Verzweigerausgang (3c) höher als eine zweite vorbestimmte Temperaturschwelle (T2) ist.

3. Vorrichtung zur Ausführung des Verfahrens nach Anspruch 1 oder 2, umfassend ein Verzweigergehäuse (3) mit einem äußeren Gehäuse (3d), das einen Eingang (3a) für ein Fluid, einen Hauptausgang (3b), einen Verzweigerausgang (3c) und eine innere Kammer für ein Fluid begrenzt, wobei eine Verschlußklappe (7) in der inneren Kammer des Verzweigergehäuses zwischen einer Schließstellung des Hauptausgangs und einer Schließstellung des Verzweigerausgangs schwenkt, ein Pneumatikzylinder (14) durch seine Kolbenstange (17) die Verschlußklappe über einen schwenkbaren Arm (15) und die Schwenkachse (7a) der Klappe betätigt, eine Verbindungsleitung (19) zwischen der inneren Kammer und dem Zylinder (14a) des Zylinders, die die Verbindung durch das Fluid zwischen dem Pneumatikzylinder und der inneren Kammer des Verzweigergehäuses herstellt, und ein elastisches Rückstellmittel (23) im Zylinder (14), dessen Rückstellkraft als Funktion der vorbestimmten Druckschwelle (PO) des Fluids gewählt wird, das sich im Verzweigergehäuse befindet, der Pneumatikzylinder (14) einen ersten Kolben (21) aufweist, der mit einem Ende der Kolbenstange (17) fest verbunden ist,
dadurch gekennzeichnet, daß der Pneumatikzylinder einen zweiten Kolben (22) aufweist, der bezogen auf die Kolbenstange axial gleitet, wobei der erste Kolben mit der Rückstellfeder (23) des Zylinders in Kontakt ist, die Kolbenstange einen vergrößerten zylindrischen Teil (17a) aufweist, der einen axialen Anschlag für den zweiten Kolben im Zylinder (14a) des Zylinders bildet und daß die Verschlußklappe (7) einen zentralen Teil (7b) und einen Teil, der einen Seitenrahmen (7c) bildet, und eine thermisch verformbare zweilamellige Feder (24) aufweist, die jeweils auf die beiden Teile der Klappe einwirkt, so daß die teilweise Öffnung der Klappe möglich ist, wenn die Temperatur des Fluids im Verzweigergehäuse (3) niedriger als eine vorbestimmte Temperaturschwelle (T1) ist.

4. Vorrichtung nach Anspruch 3,
dadurch gekennzeichnet, daß der Pneumatikzylinder (14) durch Verbindungsleitungen (18, 19) mit zwei unterschiedlichen pneumatischen Regelungsquellen verbunden ist.

5. Vorrichtung nach Anspruch 4,
dadurch gekennzeichnet, daß die Verbindungsleitung (19) zwischen dem Pneumatikzylinder (14) und dem Verzweigergehäuse (3) ein Rückschlagventil (19a) aufweist.

6. Vorrichtung nach Anspruch 4 oder 5,
dadurch gekennzeichnet, daß sie einen Fühler für die Temperatur (8) des Fluids stromab vom Verzweigerausgang (3c) des Verzweigergehäuses und ein Elektroventil (9) aufweist, das an der Verbindungsleitung (18) einer pneumatischen Regelungsquelle angebracht ist, wobei das Elektroventil offen ist, wenn die durch den Fühler gemessene Temperatur eine vorbestimmte Temperaturschwelle (T2) übersteigt.

7. Vorrichtung nach einem der Ansprüche 3 bis 6,
dadurch gekennzeichnet, daß sie ein Aschlagelement für die Verschlußklappe (7) aufweist, wobei das Anschlagelement als thermisch verformbares Metall mit Formerinnerungsvermögen derart ausgeführt ist, daß die teilweise Öffnung der Klappe erhalten wird, die den Verzweigerausgang (3c) schließt, wenn die Temperatur des Fluids im Verzweigergehäuse (3) niedriger als eine vorbestimmte Temperaturschwelle (T1) ist.

8. System zur Regelung der Ladeluft für eine Brennkraftmaschine (6), die mit einer Vorrichtung nach einem der Ansprüche 3 bis 7 ausgestattet ist,
dadurch gekennzeichnet, daß das Verzweigergehäuse an einem Ladeluft/Flüssigkeitsaustauscher (2) zur Kühlung des Motors angebracht ist, wobei der Eingang (3a) des Verzweigergehäuses mit dem Ausgang des Austauschers für die Ladeluft vereinigt ist, der Hauptausgang (3b) des Verzweigergehäuses mit einem Kühler (4) für die Ladeluft verbunden ist, der zweite Verzweigerausgang (3c) des Verzweigergehäuses mit dem Ladeluftansaugkrümmer des Motors direkt verbunden ist.

9. Regelsystem nach Anspruch 8,
dadurch gekennzeichnet, daß es einen Temperaturfühler (8) aufweist, der im Ladeluftansaugkrümmer des Motors angeordnet ist, um den Pneumatikzylinder (14) über ein Elektroventil (9) pneumatisch zu betätigen.

10. Regelsystem nach Anspruch 8 oder 9,
dadurch gekennzeichnet, daß der Luft/Flüssigkeitsaustauscher (2) mit Kühlflüssigkeit durch einen vom Kühlkreislauf des Motors abgeleiteten Kreislauf gespeist wird, wobei die aus dem Austauscher austretende Kühlflüssigkeit nicht zum Eingang des Motors direkt rückgeführt wird.

## Claims

1. A method of controlling the circulation of a fluid through a fluid bypass housing (3) which comprises an inlet (3a), a main outlet (3b), a secondary bypass outlet (3c) and selective closure means (7) of these outlets controlled by a jack (14), consisting in the pneumatic and direct actuation of the jack by the fluid located in the bypass housing so as at least partially to close the bypass outlet (3c) when the pressure of the fluid in the bypass housing is greater than a predetermined pressure threshold (PO) and partially to open the bypass outlet (3c) which is in the closed state when the temperature of the fluid in the bypass housing is lower than a first predetermined temperature threshold (T1), characterised in that use is made of mechanical means (24) within the bypass housing (3) acting directly on the selective closure means (7), these mechanical means being thermally deformable so that the temperature of the fluid in the bypass housing independently controls the partial opening of the bypass outlet by these mechanicai means.

2. A method as claimed in claim 1, characterised in that it consists in pneumatically actuating the jack (14) by a control fluid separate from the fluid passing through the bypass housing (3) so as to close the bypass outlet (3c) when the temperature of the fluid at the bypass outlet (3c) is greater than a second predetermined temperature threshold (T2).

3. A device for implementing the method as claimed in any one of the preceding claims, comprising a bypass housing (3) with an outer casing (3d) bounding a fluid inlet (3a), a main outlet (3b), a bypass outlet (3c) and an inner chamber for fluid, a closure shutter (7) pivoting in the inner chamber of the bypass housing between a position closing the main outlet and a position closing the bypass outlet, the piston rod (17) of a pneumatic jack (14) actuating the closure shutter via a pivoting arm (15) and the pivoting pin (7a) of the shutter, a connection duct (19) between the inner chamber and the cylinder (14a) of the jack establishing the fluid communication between the pneumatic jack and the inner chamber of the bypass housing and an elastic recall means (23) in the jack (14) whose recall force is selected as a function of the predetermined pressure threshold (PO) of the fluid in the bypass housing, this pneumatic jack (14) comprising a first piston (21) rigid with one end of the piston rod (17), characterised in that the pneumatic jack comprises a second piston (22) sliding axially with respect to the piston rod, the first piston being in contact with the recall spring (23) of the jack, the piston rod having an enlarged cylindrical portion (17a) forming an axial stop for the second piston in the cylinder (14a) of the jack and in that the closure shutter (7) comprises a central portion (7b) and a portion forming a lateral frame (7c) and a two-leaf spring (24) deformable thermally and acting on the two portions of the shutter respectively, so as to allow the partial opening of the shutter when the temperature of the fluid in the bypass housing (3) is lower than a predetermined temperature threshold (T1).

4. A device as claimed in claim 3, characterised in that the pneumatic jack (14) is connected by connection ducts (18, 19) to two separate pneumatic control sources.

5. A device as claimed in claim 4, characterised in that the connection duct (19) between the pneumatic jack (14) and the bypass housing (3) comprises a non-return valve (19a).

6. A device as claimed in one of claims 4 or 5, characterised in that it comprises a temperature sensor (8) for the fluid downstream of the bypass outlet (3c) of the bypass housing and an electrovalve (9) mounted on the connection duct (18) of one pneumatic control source, the electrovalve being opened if the temperature measured by the sensor exceeds a predetermined temperature threshold (T2).

7. A device as claimed in one of claims 3 to 6, characterised in that it comprises a stop member for the closure shutter (7), this stop member being made from a thermally deformable memory alloy so as to obtain the partial opening of the shutter closing the bypass outlet (3c) when the temperature of the fluid in the bypass housing (3) is lower than a predetermined temperature threshold (T1).

8. A system for regulating the supercharging air for an internal combustion engine (6) fitted with a device as claimed in any one of claims 3 to 7, characterised in that the bypass housing is mounted on a supercharging air/engine cooling fluid exchanger (2), the inlet (3a) of the bypass housing being combined with the outlet of the exchanger for the supercharging air, the main outlet (3b) of the bypass housing being connected to a supercharging air radiator (4) and the secondary bypass outlet (3c) of the bypass housing being connected directly to the engine supercharging air intake manifold.

9. A regulation system as claimed in claim 8, characterised in that it comprises a temperature sensor (8) placed in the engine supercharging air intake manifold in order pneumatically to actuate the pneumatic jack (14) via an electrovalve (9).

10. A regulation system as claimed in claim 8 or 9, characterised in that the air/fluid exchanger (2) is supplied with cooling fluid via a branch circuit (12) of the engine cooling circuit, the cooling fluid being discharged from the exchanger not being directly recycled to the engine intake.
